Europäisches Patentamt

(19) European Patent Office

Office européen des brevets

(11) Publication number: **0 070 907**

**A1**

## (12) EUROPEAN PATENT APPLICATION

published in accordance with Art. 158(3) EPC

(21) Application number: 82900386.2

(51) Int. Cl.³: **G 11 B 5/12**

(22) Date of filing: 05.02.82

Data of the international application taken as a basis:

(86) International application number:
PCT/JP82/00035

(87) International publication number:
WO82/02790 (19.08.82 82 20)

(30) Priority: 08.02.81 JP 17224.81
29.07.81 JP 119903/81

(43) Date of publication of application:
09.02.83 Bulletin 83/6

(84) Designated Contracting States:
DE FR GB NL

(71) Applicant: OHTSUBO, Akio
1-26, Yagiyama Yayoi-cho Sendai-shi
Miyagi 982(JP)

(72) Inventor: OHTSUBO, Akio
1-26, Yagiyama Yayoi-cho Sendai-shi
Miyagi 982(JP)

(74) Representative: Freed, Arthur Woolf et al,
MARKS & CLERK 57-60 Lincoln's Inn Fields
London WC2A 3LS(GB)

(54) **VERTICAL RECORDING-TYPE SINGLE POLE MAGNETIC HEAD.**

(57) A vertical recording-type single pole magnetic head in which with a medium (21) the surface (16) contacting of a pillar-shaped core (12) is so formed, that the medium entering-side edge (15) is not parallel to the medium leaving-side edge (14) by the length of several times working wavelength ($\lambda$). The pillar-shaped core (12) has a trapezoid pillar shape. The azimuth effect at the time of reproduction makes it possible to increase the average thickness of the core (12) in the direction (v) the medium advances without any sacrifice of the reproduction resolution, so that the magnetic flux transfer efficiency between the top (16) of the core and the coil-wound portion thereof is so increased as to make recording and reproduction from the one side of the medium (21) possible. Especially in using a tape medium, soft magnetic material (12b) with a higher saturation magnetization is put by vacuum evaporation onto the side wall of the pillar-shaped core (12) on the medium leaving side thereof so as to narrow the distribution of the vertical recording magnetic field with the result of increasing the recording efficiency.

FIG. 1
第 1 図

FIG. 2
第 2 図

FIG. 8
第 8 図

DESCRIPTION

PERPENDICULAR RECORDING TYPE SINGLE POLE MAGNETIC HEAD

Technical Field

The present invention relates to magnetic heads for recording and reproducing signals on magnetic mediums, and more particularly to perpendicular recording type single pole magnetic heads which effect read-write operation from one side of a magnetic medium.

Background Art

The conventional method of recording signals on magnetic mediums, such as magnetic tapes and disks, has been the longitudinal recording method according to which magnetic layers were magnetized by ring-shaped magnetic heads in the direction parallel to the surfaces of the magnetic mediums. The recording density attainable by the longitudinal recording method, however, is limited, and thus the perpendicular magnetization recording method, which is excellent in high density magnetic recording performance of FM and digital signals, has been proposed in recent years as a replacement for the longitudinal recording method. With regard to this perpendicular recording method, reference is made to the article by S. Iwasaki, "Perpendicular Magnetic Recording," (IEEE Trans. on Magn., Vol. MAG-16, No.1, Jan. 1980, pp. 71-76), and to United States Patent 4,210,946 (issued to Iwasaki et al. on Jul. 1, 1980). According to this perpendicular recording method, the magnetic layers in the mediums are magnetized perpendicular to the surfaces of the mediums, and thus the stability with regard to the magnetostatic energy of the recorded remanent magnetization state is excellent. Therefore, this method makes it possible to increase the density of the magnetic recording to the highest possible magnitude.

The perpendicular recording type read-write heads proposed, for example, in the above mentioned article were, however, of the type which effect read-write operation by main and auxiliary magnetic poles disposed on opposite sides of the magnetic medium in the direction of the thickness thereof. Accordingly, these perpendicular recording type heads were not applicable to hard disks of more than a given thickness, or to rotational head systems in which the heads are put in rotational motion.

It has been possible to effect perpendicular recording from one side of the surface of the magnetic medium using only a single magnetic pole, by disposing a support core formed of a soft magnetic substance around the portion of the single-pole forming prism-shaped core around which the coil is wound, thereby avoiding the magnetic saturation of the prism-shaped core at the portion thereof situated in the neighbourhood of the coil. It has been difficult, however, to effect the reproducing operation using the same one head, because, although it has been necessary to make the thickness of the pole-forming prism-shaped core extremely small in the direction of the movement of the medium in order to increase the resolution of the reproduction of the head having the above described structure, the reduction of the thickness of the pole-forming prism-shaped core has resulted in the decrease in the conductance of the magnetic flux through that portion of the prism-shaped core which is not surrounded by the support core, whereby reproduced signals are reduced to a very low magnitude. With regard to this type of magnetic heads, reference is made to the above mentioned U.S. Patent and Japanese Laid-Open Patent Application 54-51804.

Disclosure of the Invention

Thus, an object of the present invention is to provide a vertical recording type single pole magnetic head which is not only capable of recording and reproducing signals at a high density from one side of a magnetic medium, but which is also compatible with all types of magnetic mediums. More particularly, an object of the present invention is to simultaneously satisfy the two apparantly contradictory aims of improving the resolution and increasing the output power of the reproduction in a vertical recording type single pole magnetic head which effects the read-write operation from one side of a magnetic medium by a prism-shaped core which forms a single magnetic pole as described above. A further object of the present invention is to provide such a magnetic head which is compatible with any kind of medium.

These objects of the present invention are attained by the present invention as follows. The edge situated at the upstream side with respect to the direction of movement of the medium (hereinafter referred to as the medium flow-in side) and the edge at the downstream side (hereinafter referred to as the medium flow-out side) of the surface of a prism-shaped single-pole-forming core adjacent to the surface of the medium are designed to run in non-parallel directions and are made to form different angles with the direction of the movement of the medium.

As the magnetic head according to the present invention is constructed as described above, the recorded remanent magnetization in the medium is formed in a pattern which is parallel to the medium flow-out side edge of the prism-shaped core. The voltage induced in the coil of the single pole magnetic head is determined by the difference between the temporal change rates $(d\phi/dt)$ of the magnetic fluxes $\phi$ going in and out of the medium at the flow-in and flow-out side edges.

If the flow-in side edge of the prism-shaped core is made to run non-parallel with the flow-out side edge over a length not less than a small multiple of the longest recording wavelength in use, then $d\phi/dt$ at the flow-in side is averaged to a small magnitude due to azimuth loss, so that $d\phi/dt$ at the flow-out side alone contributes substantially to the induced voltage. Thus, as thickness of the core (the average thickness between the flow-in and flow-out edges) can thus be increased without sacrificing the resolution of the reproduction, the conductance of the magnetic flux can be improved, to increase the reproduction output power.

Further, in order to improve the efficiency of recording in flexible mediums having comparatively thin layers of high magnetic permeability, the prism-shaped core of the magnetic head according to the present invention may comprise a prism-forming core portion made of a comparatively low saturation magnetization and a magnetic-pole-forming layer of a high saturation magnetization fixed to the side-surface of the prism-forming core portion on the medium flow-out side.

A condition for high efficiency in vertical recording by means of a single pole magnetic head from one side of the medium is that the horizontal magnetization layer formed of a high permeability magnetic substance has the image effect, i.e., the magnetic flux flowing out of the single pole of the prism-shaped core is sufficiently sucked into the horizontal magnetization layer. Unlike hard disks, however, meciums such as tapes cannot have a horizontal magnetization layer of greater thickness. Thus, the vertical recording magnetic field flowing out of the thick prism-shaped core should be forced into the form of a thin layer at the medium flow-out edge if the above-mentioned image effect is to be attained. In the case of a prism-shaped core having two portions as described above, the vertical magnetic field is inherently strong and peaks at the edge portion of the magnetic pole forming layer, because the demagnetizing field at that point is small. Further, the saturation magnetization, or the effective magnetic permeability, of the magnetic-pole-forming layer is greater than that of the prism-forming core portion. Thus, the distribution or the intensity of the vertical magnetic field generated at the single-pole-forming surface by a predetermined current through the coil can be made to overcome the coercive force in the recording layer only at the magnetic-pole-forming layer. When this is the case, the on-coming demagnetized medium is magnetized only at the end of the magnetic-pole-forming layer. Thus, the vertical magnetic field distribution becomes concentrated and recording efficiency is improved.

As described above, the single pole magnetic head of this invention is capable of effecting read-write operation from one side. Thus, a recording magnetic field of good verticality with respect to the vertical recording medium is generated and reproduction of high efficiency and resolution can be realized in a conventional FM or digital magnetic recording system simply by replacing the ring-shaped heads thereof with the magnetic head of the present invention. Thus, the present invention enables the immediate realization of high density recording by the vertical recording method in computer memories, VTR's, PCM audio-devices, and so on.

Brief Description of the Drawings

Further detailed objects, structures, and advantages of the present invention will become apparent from the following description in the Best Modes For Carrying Out The Invention, considered in conjunction with the accompanying drawings, in which

Fig. 1 is a side view of the magnetic head according to the present invention, schematically illustrating the cross section of the magnetic medium together with a side-view of the magnetic head;

Fig. 2 is a top view of the prism-shaped core of the magnetic head of Fig. 1, schematically illustrating the magnetic recording pattern formed in the medium during the recording, together with a top view of the prism-shaped core;

Fig. 3 is a view similar to that of Fig. 2, but schematically showing the magnetic recording pattern as it appears during reproduction, together with a top view of the prism-shaped core;

Fig. 4 shows the waveforms of the temporal changes of the magnetic fluxes flowing into the prism-shaped core during reproduction by the magnetic head of Fig. 1;

Fig. 5 shows the theoretical characteristic curves representing the change of the reproduction output with respect to the recording density for the magnetic head of Fig. 1 and for a conventional (thin parallel pole) magnetic head;

Fig. 6 is a schematic side view of a device used in experiments involving the magnetic head of Fig. 1;

Fig. 7 shows the characteristic curves of the reproduction output vs. recording density, obtained in the experiments using the device of Fig. 6 incorporating the magnetic head of Fig. 1;

Fig. 8 is a side view of another magnetic head according to the present invention, showing the magnetic head together with a cross section of the magnetic medium;

Fig. 9 is a top view of the prism-shaped core of the magnetic head of Fig. 8;

Fig. 10 is a diagram showing the waveform of the reproduction output voltage of the magnetic head of Fig. 8;

Fig. 11 is a top view of the prism-shaped core of still another magnetic head according to the present invention;

Fig. 12 is a perspective view of the prism-shaped core of another magnetic head according to the present invention;

Fig. 13 is a view similar to that of Fig. 11, but showing still another embodiment; and

Fig. 14 is a view similar to that of Fig. 13, but showing yet another embodiment.

Best Modes For Carrying Out The Invention

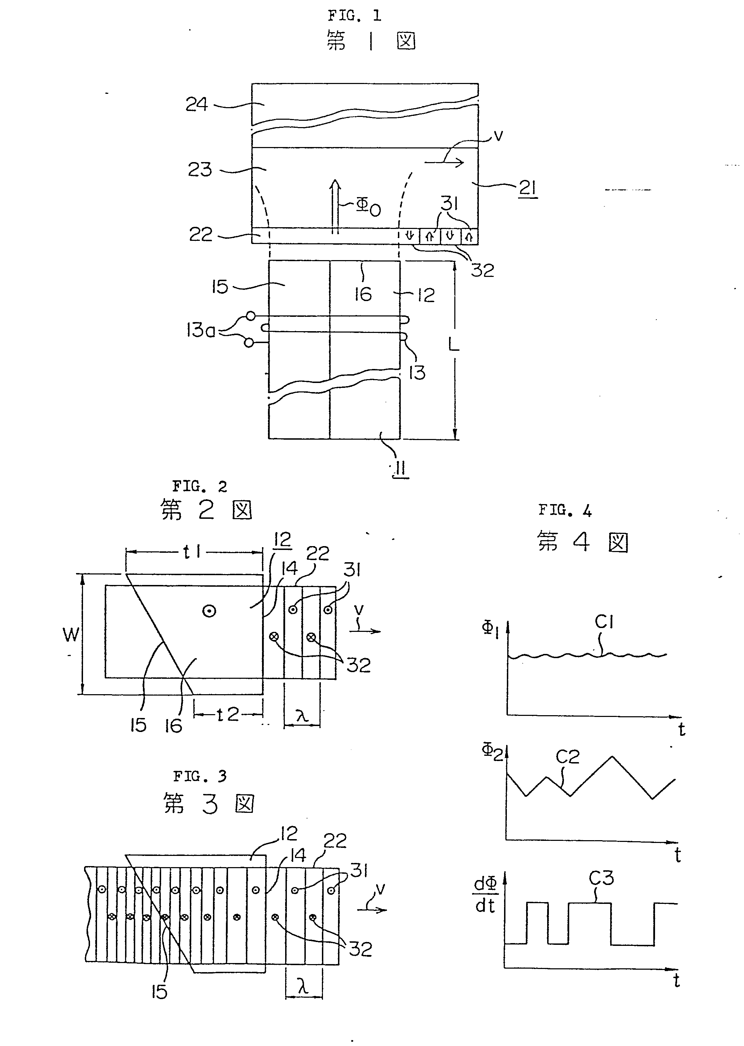

Referring to Figs. 1 through 4 of the drawings, the structure and operation of an embodiment showing the fundamental construction of the present invention are now described.

First, the structure of this embodiment is described referring to Figs. 1 and 2. The vertical recording type single pole magnetic head 11 according to the present invention comprises a prism-shaped core 12 formed of a soft magnetic material and a coil 13 wound around the core 12. The single-pole-forming surface thereof which is parallel with the surface of the medium 21, i.e., the upper surface 16 of the prism-shaped core 12, is adjacent to the magnetic medium 21 moving in the direction v with respect to the core 12. Fig. 1 shows an embodiment in which the medium 21 is a hard disk comprising a vertical magnetization layer 22 of cobalt-chromium alloy, a horizontal magnetization layer 23 of a material of a high magnetic permeability, such as permalloy, and a base 24 of a non-magnetic material, such as aluminum. In the case of the hard disk 21, the base layer 24 is, for example, about 1.5 mm thick and the horizontal magnetization layer 23 a few hundred, for example 200, microns thick. The thickness of the vertical magnetization layer 22 is, for example, about 1 micron. For further details of the medium to be used with the magnetic head of the present invention, reference is made to the article and the U.S. patent mentioned above.

Prism-shaped core 12 made of a magnetic material, such as sendust (Fe-Si-Al alloy), forms a quadrangular prism having trapezoidal-shaped bases. The length L of the core 12 should be designed to have a large enough value, for example about 7 mm, for the demagnetizing factor to be kept small in the direction perpendicular to the surface of the medium 21. The upper surface 16 of the core 12 forms a trapezoid, and the lengths t1 and t2 of the two sides thereof parallel to the direction of the movement of the medium 21 are 250 and 150 microns, respectively. The length W of the medium-flow-out-side edge 14 thereof which corresponds to the width of the track formed on the medium 21 is 500 microns. Thus, in the case of this embodiment, the average thickness (1/2)(t1 + t2) of the core 12 in the direction of the movement v of the medium 21 is equal to 200 microns, and the component (t1 − t2) of the medium-flow-in-side edge 15 (namely, at the upstream side with respect to the direction of movement v of the medium) along the direction perpendicular to the flow-out-side edge 14 (which coincides with the direction of the movement v of the medium in this embodiment) is equal to 100 microns.

The coil 13 formed by a coated copper wire of about 30 microns in diameter wound around the prism-shaped core 12 for 400 turns over a length of about 2 mm comprises a pair of terminals 13a separated by about 2 mm. Thus, the distance from the center of the two terminals 13a to the upper surface 16 of the core 12 is about 1.5 mm. In order to increase the magnetic flux conductance between the portion of the core 12 around which the coil is wound and the upper surface 16 thereof, the average thickness $(1/2)(t1 + t2)$ of the core 12 should not be made too small compared to the distance from the center of the coil 13 to the upper surface 16 of the core 12. On the other hand, in order that the magnetic flux $\Phi_0$ flowing out of the upper surface 16 of the core 12 during recording be sucked into the horizontal magnetization layer 23 effectively, the average thickness $(1/2)(t1 + t2)$ of the core 12 should desirably be equal to or less than the thickness of the horizontal magnetization layer 23.

Next, the operation of this embodiment during recording is described with reference to Figs. 1 and 2.

When an input electrical signal of a few milliamperes is applied across the terminals 13a of the coil 13, a magnetic flux of a direction corresponding to that of the current flowing through the coil 13 is induced in the core, the upper surface 16 of the core forming an alternating magnetic pole. The magnetic flux $\Phi_0$ alternating its polarity in accordance with the direction of the electrical signal penetrates the medium 21 moving in the direction of the arrow v at 4.8 cm/s, for example, and magnetizes the vertical magnetization layer 22, against the resistance thereof to be magnetized, in a direction perpendicular to the surface of the medium, i.e., alternately in the upward and downward directions 31 and 32 corresponding to the directions of the magnetic flux $\Phi_0$, and thus forms a track which magnetically records the signal. Each upward and downward magnetization portion 31 or 32 corresponds to one bit, and a pair formed of such upward and downward magnetization portions corresponds to one wavelength $\lambda$. Namely, the length of one bit is one half of the wavelength $\lambda$. In the case of this embodiment, the maximum and minimum operating wavelength are 10 and 0.3 microns respectively. The magnetization portions 31 and 32 of the vertical magnetization layer 22 are magnetized by the flux at the medium-flow-out-side edge 14 of the upper surface 16 of the core in parallel with the flow-out-side edge 14.

Next, the operation of this embodiment during reproduction is described with reference to Figs. 3 and 4.

When the medium 21 moves in the direction shown by the arrow v, at a velocity of 4.8 cm/s, adjacent to the upper surface 16 of the core 12, the magnetix flux Φ flowing out of the alternately magnetized portions 31 and 32 in registry with the upper surface 16 of the core 12 penetrates the core 12 through the upper surface 16 of the core and induces an electromotive force corresponding to the differential coefficient dΦ/dt of the total magnetic flux Φ with respect to time. The induced electromotive force is taken out at the terminals 13a of the coil 13 as the reproduced output electrical signal.

This reproduced output corresponding to dΦ/dt substantially corresponds to the input electrical signal applied during the recording. The mechanism thereof is explained hereinbelow with reference to Figs. 3 and 4.

As shown schematically in Fig. 3, a number of magnetized portions 31 and 32 corresponding to at least a few wavelengths intersect the upper side edge 15. The reasons therefor are that the magnetized portions 31 and 32 are in parallel with the downstream-side edge 14 and that the component of the upstream-side edge 15 along the direction perpendicular to the downstream-side edge 14 is as long as 100 microns, or not less than a few times the maximum wavelength in use. If the value of the maximum wavelength in use is limited to 10 microns, the magnetized portions 31 and 32 corresponding to 10 wavelengths, or 20 bits, intersect the upstream-side edge 15 at the same time. Thus, the magnetic flux $\Phi_1$ at the upstream-side edge 15 hardly varies with respect to time, and comes to have a waveform as shown in the waveform C1 in Fig. 4. Namely, the flux $\Phi_1$ is averaged out by the azimuth effect and the variation thereof with respect to time becomes negligible.

On the other hand, as the downstream-side edge 14 is parallel to the magnetized portions 31 and 32 as described above, the magnetic flux $\Phi_2$ at the downstream-side edge 14 changes corresponding to the direction of the magnetized portions 31 and 32, and has a saw-tooth-shaped waveform as shown in the waveform C2 in Fig. 4. The differential coefficient $d\Phi/dt$ of the total magnetic flux $\Phi$ with respect to time is equal to the difference between those of the magnetic fluxes $\Phi_1$ and $\Phi_2$ at the downstream- and upstream-side with respect to time:

$$d\Phi/dt = d\Phi_2/dt - d\Phi_1/dt$$

The magnetic flux $\Phi_1$ at the upstream side hardly ever changes due to the azimuth effect as described above so that $d\Phi_1/dt$ is negligible. Thus, $d\Phi/dt$ is substantially equal to $d\Phi_2/dt$, the variation of which with respect to time substantially corresponds to the waveform of the input electrical signal applied during recording, as shown in the waveform C3.

In the above detailed description of the first embodiment, the dimensions thereof, etc., are given only for illustrative purposes, and are subject to changes in accordance with the applications within the ranges in which the functions of the present invention are not impaired. For example, as is apparent from the above description of the operation, the above described azimuth effect can be attained if the difference in length $(t_1 - t_2)$ of the two sides which are parallel to the direction of movement of the medium is at least a multiple (for example two times) of the maximum wavelength in use. Further, although the average thickness $(1/2)(t_1 + t_2)$ of the core 12 has been designed to be 200 microns in the embodiment described above, it is advantageous for it to be just a few tens of microns when the maximum wavelength is very small and the velocity of the movement of the medium is great. In such case, it is necessary to reduce the distance between the upper surface 16 of the core 12 and the center of the coil 13 by the application of, for example, thin film integrated circuit techniques, so that the magnetic flux conductance through the core 12 is improved.

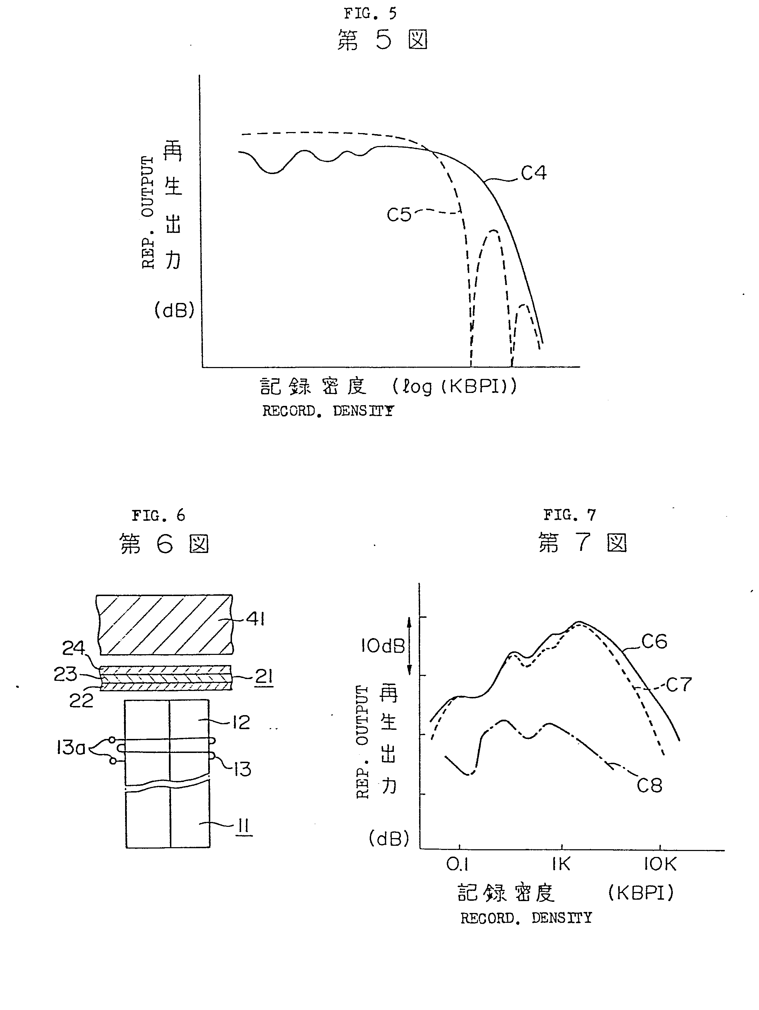

The solid line C4 in Fig. 5 represents the theoretically calculated characteristic curve of recording density vs. reproduction output of the magnetic head of Figs. 1 and 2. The dotted line C5, on the other hand, represents a similar curve of a magnetic head which comprises a quadrangular prismatic core of a few microns in average thickness having a rectangular base.

As shown by the characteristic curve C5, the reproduction output of a core with a rectangular upper surface disappears at recording densities at which the wavelengths $\lambda$ correspond to 1, 1/2, 1/3, 1/4,.....times the core thickness. On the other hand, the magnetic head 11 comprizing the trapezoidal core 12 according to the present invention has a reproduction output of monotonic densuty characteriparticles (frequency characteristics) at the high density region thereof, as shown by the curve C4. The dips in the curve C4 corresponding to the nullified output points of the core having a rectangular upper surface appear at the low recording density region due to the greater average thickness (1/2)(t1 + t2) of the core 12. Thus, if the average thickness (1/2)(t1 + t2) is designed to be sufficiently great with respect to the maximum wavelength in use (for example, not less than two times the maximum wavelength) as in the embodiment described above, then the dips of the characteristic curve C4 thereof would not affect the operation of the head. Further, by increasing the above described difference in length (t1 − t2), the depths of these dips can be reduced.

Next, the reproduction output of the magnetic head of Figs. 1 and 2 with respect to the recording density were determined experimentally using the device shown in Fig. 6.

As the magnetic head 11 in Fig. 6 is constructed similarly to that of Figs. 1 and 2, description thereof is omitted. The medium 21 in Fig. 6 is a commercially available longitudinal recording type magnetic tape with a double-layer-coated-film medium comprising a $CrO_2$ layer of high resistance to magnetization, a $\gamma-Fe_2O_2$ layer 23 of intermediate coercive force, and a base layer 24. The layer 23 of this commercial tape is of insufficient thickness and the coercive force is not sufficiently small, for the image effect to be anticipated. Thus, in this experiment, a plate-shaped image core 41 made of 45 permalloy (permalloy containing 45 % nickel), a soft magnetic material of a magnetic saturation substantially equal to that of the core 12, was disposed at the position of a pad opposite to the head 11 on opposing sides of the tape 21.

Fig. 7 shows the results of this experiment. The solid and dotted lines C6 and C7 show the experimentally determined values of the reproduction output with respect to the recording density in the cases in which the thickness of the image core 41 is 0.5 and 0.1 mm respectively. The dot-and-dash line C8 shows, for comparison's sake, the characteristics in the case in which the image core was not used. The experimental results appear to show in sufficient reproduction output in the high density recording region when compared to the theoretically calculated values. This, however, is deemed to be attributable to insufficient measures to overcome the spacing loss and is not due to any fundamental defects in the structure of the device.

From this experiment, it has been found that the dips of the reproduction output appearing at the recording densities corresponding to recording wavelengths $\lambda$ equal to 1, 1/2, 1/3,....times the average thickness $(1/2)(t1 + t2)$ of the core are as shallow as anticipates from theory and they do not affect the high density region. It has further been found that as the average thickness of the core 12 is great, the conductance of the magnetic flux is good and the reproduction output reaches sufficient magnitude.

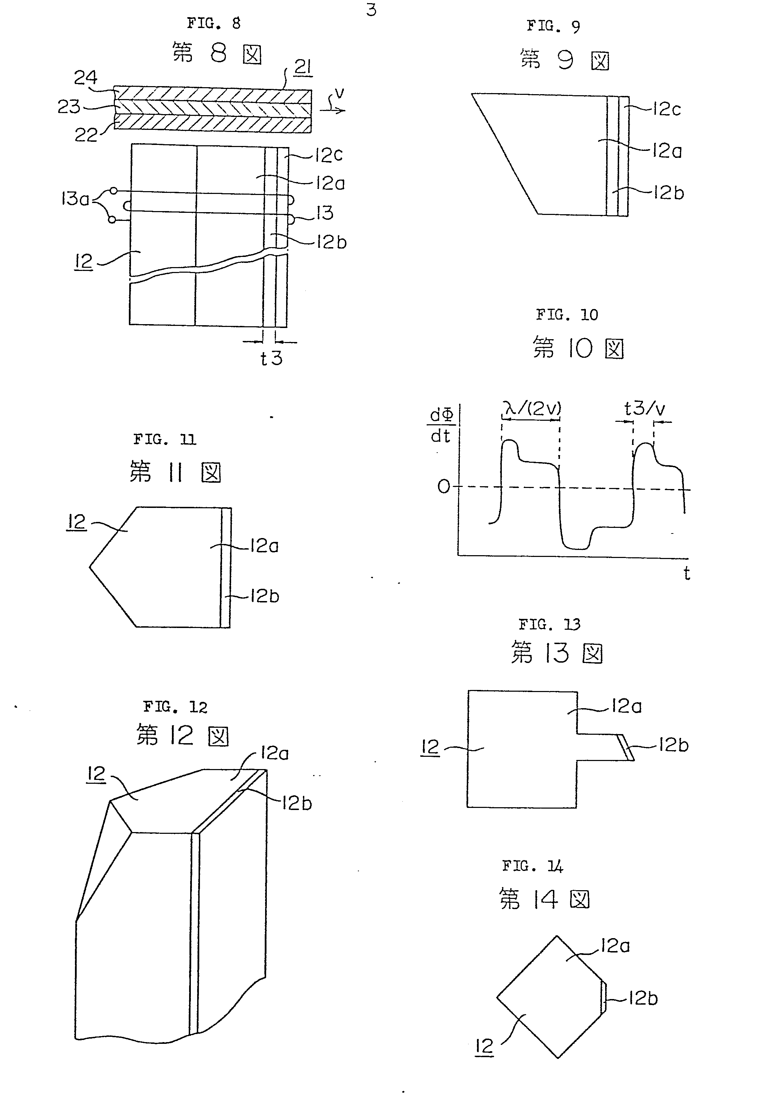

Next, a second embodiment of the present invention which is also compatible with flexible mediums is described, with reference to Figs. 8 and 9.

The magnetic medium 21 in Fig. 8 is a magnetic tape comprising the vertical and horizontal magnetization layers 22 and 23 formed of materials similar to those of the hard disk of Fig. 1, and a base 24 made of a synthetic resin. The vertical magnetization layer 22 is, for example, about 0.5 microns thick, the horizontal magnetization layer 23 about 0.5 microns thick and the base 2 is about 10 microns thick. Thus, compared to the hard mediums, the thickness of the horizontal layer 23 of flexible mediums such as magnetic tape and floppy disks is greatly reduced.

The prism-shaped core 12 of the magnetic head of Figs. 8 and 9 comprises a prism-forming core 12a made of a soft magnetic material of comparatively small magnetic saturation, a magnetic-pole-forming layer 12b made of a soft magnetic material of comparatively large saturation magnetization fixedly attached to the side-surface of the prism-shaped core 12a on the medium-flow-out-side, and a non-magnetic layer 12c superimposed on the magnetic-pole-forming layer 12b.

The prism-forming core 12a made of a ferrite, such as Mn-Zn ferrite, and having dimensions similar to those of the prism-shaped core 12 of Figs. 1 and 2, reinforces the magnetic-pole-forming layer 12b magnetically and mechanically. The magnetic-pole-forming layer 12b is formed by attaching, for example, 45 permalloy (a Ni-Fe alloy of 45 % Ni) or sendust (Fe-Si-Ni alloy) to the side-surface of the prism-shaped core 12a on the medium-flow-out-side to a thickness t3 of 0.5 micron, by a method such as sputtering, vapour deposition, ion plating, etc. The non-magnetic layer 12c is formed by superposing a hard non-mangetic material such as aluminum oxide $Al_2O_3$ having a coefficient of thermal expansion substantially equal to that of ferrites, upon the magnetic-pole-forming layer 12b to a thickness of a few microns by a method such as sputtering, vapour deposition, ion plating, etc. The non-magnetic layer 12c is provided to improve the sharpness and the tape-contact of the medium-flow-out-side edge of the prism-shaped core 12. As the prism-shaped core 12 of Figs. 8 and 9 for low density recording is constructed as described above, the dimensions and the form thereof as a whole are substantially equal to those of the prism-shaped core of Figs. 1 and 2. Further, as the coil 13 has a structure similar to that of the embodiment of Figs. 1 and 2, description thereof is omitted.

Next, the operation of the embodiment of Figs. 8 and 9 during recording will be described.

As in the case of the embodiment of Figs. 1 and 2, magnetic flux is induced in the prism-shaped core 12 at the prism-forming core 12a and the magnetic-pole-forming layer 12b thereof, corresponding to the electrical signal applied across the terminals 13a of the coil 13. However, the fact that the magnetic saturation of the magnetic-pole-forming layer 12b is greater than that of the prism-forming core 12a, in addition to the fact that the vertical magnetic field inherently concentrates at the edge of the magnetic-pole-forming layer 12b due to a small demagnetizing field thereat, contributes to cause the magnetic flux of the prism-shaped core 12 to concentrate around the end of the magnetic-pole-forming layer 12b of a small thickness t3, and to be effectuvely sucked into the horizontal magnetization layer 23. Namely, the image effect is attained in spite of the extremely thin horizontal magnetization layer 23 of about 0.5 micron, whereby a high recording efficiency is achieved. As the operation of the embodiment Figs. 8 and 9 during recording is otherwise similar to that of the embodiment of Figs. 1 and 2, description thereof is omitted.

Next, the operation of the embodiment of Figs. 8 and 9 during reproduction is described with reference to Fig. 10. Description of operations thereof similar to those of the embodiment of Figs. 1 and 2 is, however, omitted.

As shown in Fig. 10, the reproductive electromotive force corresponding to the differential coefficient $d\Phi/dt$ with respect to time t of the total magnetic flux $\Phi$ flowing into the prism-shaped core 12 has a step-shaped waveform similar to that of the waveform C3 of Fig. 4, each pulse, however, having a small superimposed pulse at the leading edge thereof. Namely, superimposed on each pulse of the reproduced signal having a width $\lambda/(2v)$ corresponding to the half wavelength $\lambda/2$ (or the bit length) is a small pulse having a width $t3/v$ corresponding to the thickness $t3$ of the magnetic-pole-forming layer 12b, (wherein v is the velocity of the movement of the medium). If, however, the minimum half wavelength $\lambda/2$ in use (namely the bit length) is limited above the thickness $t3$ of the magnetic-pole-forming layer 12b, then a good signal corresponding to the recording input signal can be obtained by waveform treatment, such as clipping, of the reproduced signal.

It goes without saying that the materials, the forms, and the dimensions given in detail for the embodiments described above may be modified within arange compatible with the effective functioning of the present invention in accordance with the purposes of application. The thickness $t3$ of the magnetic-pole-forming layer 12b, for example, may be chosen in a range which is under the minimum bit length in use and which is substantially under the thickness of the horizontal magnetization layer 23.

The magnetic head of the present invention is not limited to the two embodiments described above in detail, and may be subject to a variety of modifications. Referring to Figs. 11 through 14 of the drawings, embodiments incorporating such modifications are now described.

Fig. 11 shows a top view of a prism-shaped core 12 having the form of a pentagonal prism which comprises, as in the case of the embodiment of Figs. 8 and 9, a prism-forming core 12a formed of a ferrite, and a magnetic-pole-forming layer 12b formed, for example, of permalloy, the edge of the magnetic-pole-forming layer 12b being situated at the medium flow-out side.

The prism-shaped core 12 is constructed as shown in Fig. 12 and comprises a prism-forming core 12a having the form of a rectangular prism, the two corners of which at the medium flow-in side have been cut off so that the upper surface of the prism-shaped core 12 becomes pentagonal.

In the case of the embodiments of Figs. 11 and 12, the upper surface of the prism-shaped core 12 is symmetric with respect to the direction of the movement of the medium, which results in the advantage that the force acting on the prism-shaped core 12 from the medium is not biased.

The prism-shaped core 12 of Fig. 13 is produced first by forming from, for example, a ferrite, a prism-shaped body having trapezoidal-shaped bases of dimensions similar to those of the core of Figs. 1 and 2, then vapour-depositing a layer of, for example, permalloy upon a side surface of the prism-shaped body thus formed, and finally by cutting off the two edges of the side surface thereof, thereby forming the prism-shaped core 12 comprising the prism-forming core 12a and the magnetic-pole-forming layer 12b. In the case of this embodiment, the medium moves from left to right in Fig. 13 so that the magnetic recording in the medium is effected in parallel with the edge of the magnetic-pole-forming layer 12b. As this embodiment is constructed as described above, it is suited to application to narrow track devices, in which the track width can be reduced, for example, to about 20 microns.

Fig. 14 shows an embodiment wherein a rectangular prism having square bases, of sides of, for example, 500 microns is formed of a ferrite, with one edge thereof cut off to form a prism-forming core 12a, and with permalloy, for example, vapour-deposited on the surface about, for example, 20 microns wide, which surface is then exposed by cutting, thereby forming the magnetic-pole-forming layer 12b. Thus, it is possible to reduce the track width to, for example, 20 microns.

The embodiments of Figs. 11 through 12 are constructed similarly to that of Figs. 8 and 9, and so detailed description thereof is omitted. It is obvious that a non-mangetic layer may be vapour-deposited on the magnetic-pole-forming layer also in the case of these embodiments to improve the medium-to-head contact.

The object of the present invention is attained if the azimuth effect occurs at the flow-out-side edge of the prism-shaped core 12 against the magnetic recording pattern which is in parallel with the flow-out-side edge thereof. Thus, the form thereof is not limited to the trapezoid or the pentagon described above in conjunction with the described embodiments. For example, the difference in length (t1 - t2) as described above in conjunction with the described embodiments can be reduced to about 10 microns if the wavelength range is limited to under a few microns. Thus, in such case, the flow-in-side edge formed by rough machin-ing of the order of 10 microns with imperfect contact with the medium is substantially in non-parallel relationship with the smoothly machined flow-out-side edge in excellent contact with the medium, which relationship achieves the objects of the present invention.

What is claimed is:

1.   A vertical recording type single pole magnetic head comprising a prism-shaped core (12) and a coil (13) magnetically coupled to said prism-shaped core, said magnetic head magnetically recording an electrical signal applied across said coil (13) and magnetically reproducing the recorded signal from one side of a surface of a magnetic medium (21) which moves relative to the prism-shaped core (12), said prism-shaped core having a surface (16) adjacent to and parallel with said surface of the magnetic medium, characterized in that the edge (15) of said surface (16) at the upstream side with respect to the direction (v) of the movement of the medium and the edge (14) thereof at the downstream side form different angles with said direction (v) of the movement.

2.   A magnetic head as claimed in claim 1, characterized in that said surface (16) forms a trapezoided.

3.   A magnetic head as claimed in claim 1, characterized in that said surface (16) forms a pentagon.

4.   A magnetic head as claimed in claim 1, characterized in that said prism-shaped core (12) comprises a prism-forming core (12a) formed of a first

0070907

magnetic material, and a magnetic-pole-forming layer (12b) formed of a second magnetic material of greater magnetic saturation than said first magnetic material, said magnetic-pole-forming layer (12b) being secured on a surface of said prism-forming core (12a) which is on the downstream side with respect to said direction (v) of the movement of the medium.

5. A magnetic head as claimed in claim 1, characterized in that said prism-shaped core (12) is formed of sendust.

6. A magnetic head as claimed in claim 4, characterized in that said prism-forming core (12a) is formed of a ferrite and said magnetic-pole-forming layer (12b) is formed of a magnetic material selected from the group consisting of permalloy and sendust.

FIG. 1
第 1 図

FIG. 2
第 2 図

FIG. 3
第 3 図

FIG. 4
第 4 図

2

FIG. 5

第 5 図

REP. OUTPUT 再生出力 (dB)

C4

C5

記録密度 （log (KBPI)）
RECORD. DENSITY

FIG. 6

第 6 図

41

24
23
22

21

12

13a

13

11

FIG. 7

第 7 図

10dB

REP. OUTPUT 再生出力 (dB)

C6

C7

C8

0.1    1K    10K

記録密度 （KBPI）
RECORD. DENSITY

FIG. 8
第 8 図

24
23
22
21
v

12c
12a
13a
13
12b
12
t3

FIG. 9
第 9 図

12c
12a
12b

FIG. 10
第 10 図

$\frac{d\Phi}{dt}$

$\lambda/(2v)$    t3/v

0

t

FIG. 11
第 11 図

12
12a
12b

FIG. 12
第 12 図

12
12a
12b

FIG. 13
第 13 図

12a
12
12b

FIG. 14
第 14 図

12a
12b
12

# INTERNATIONAL SEARCH REPORT

International Application No PCT/JP80/70907

## I. CLASSIFICATION OF SUBJECT MATTER (if several classification symbols apply, indicate all) 3

According to International Patent Classification (IPC) or to both National Classification and IPC

Int. Cl.$^3$    G11B 5/12

## II. FIELDS SEARCHED

| Minimum Documentation Searched 4 | |
| --- | --- |
| Classification System | Classification Symbols |
| I P C | G11B 5/12 |

| Documentation Searched other than Minimum Documentation to the Extent that such Documents are Included in the Fields Searched 5 | |
| --- | --- |
| Jitsuyo Shinan Koho | 1931 – 1981 |
| Kokai Jitsuyo Shinan Koho | 1972 – 1981 |

## III. DOCUMENTS CONSIDERED TO BE RELEVANT 14

| Category * | Citation of Document, 16 with indication, where appropriate, of the relevant passages 17 | Relevant to Claim No. 18 |
| --- | --- | --- |
| E | JP,A, 57-40723 (Matsushita Electric Industrial Co., Ltd.)  6. March. 1982 (6.3.82) | 1 – 6 |
| A | US,A, 4,210,946 (Sony Corporation, Fujitsu Limited, Shun-Ichi Iwasaki)  1. July. 1980  (1.7.1980) | 1 |

* Special categories of cited documents: 15

"A" document defining the general state of the art
"E" earlier document but published on or after the international filing date
"L" document cited for special reason other than those referred to in the other categories
"O" document referring to an oral disclosure, use, exhibition or other means

"P" document published prior to the international filing date but on or after the priority date claimed
"T" later document published on or after the international filing date or priority date and not in conflict with the application, but cited to understand the principle or theory underlying the invention
"X" document of particular relevance

## IV CERTIFICATION

| Date of the Actual Completion of the International Search 2 | Date of Mailing of this International Search Report 2 |
| --- | --- |
| April 30, 1982 (30.04.82) | May 17, 1982 (17.05.82) |
| International Searching Authority 1 | Signature of Authorized Officer 20 |
| Japanese Patent Office | |

Form PCT/ISA/210 (second sheet) (October 1977)